# FASCICULE DE BREVET EUROPEEN

(11) **EP 3 066 359 B1**
(45) Date de publication et mention de la délivrance du brevet: **25.11.2020**
(21) Numéro de dépôt: 14799184.8
(22) Date de dépôt: 30.09.2014
(51) Int. Cl.: F16H 48/38, F16H 48/08

(54) **DIFFERENTIEL DE TRANSMISSION COMPORTANT DES RONDELLES DE FRICTION MUNIES DE MOYENS INDICATEURS DE PRESENCE**
GETRIEBEDIFFERENZIAL MIT REIBUNGSUNTERLEGSCHEIBEN MIT PRÄSENZANZEIGE
TRANSMISSION DIFFERENTIAL COMPRISING FRICTION WASHERS PROVIDED WITH PRESENCE INDICATION MEANS

(30) Priorité: 06.11.2013 FR 1360861
(43) Date de publication de la demande: 14.09.2016
(73) Titulaire: Renault S.A.S., 92100 Boulogne-Billancourt (FR)
(72) Inventeur: RICHAUD, Xavier, F-92800 Puteaux (FR); MERCAY, Patrice, F-78180 Montigny-le-bretonneux (FR); MAUDET, Frédéric, F-91330 Yerres (FR)
(86) Numéro de dépôt international: PCT/FR2014/052482
(87) Numéro de publication internationale: WO 2015/067865

(56) Documents cités:
- EP-A2- 1 895 197
- US-A- 4 959 043
- US-B1- 8 535 191

## Description

L'invention concerne un différentiel de transmission comportant des rondelles de friction munies de moyens indicateurs de présence.

L'invention concerne plus particulièrement un différentiel de transmission, notamment pour véhicule automobile, comportant au moins :
- un carter qui est apte à être lié en rotation à une couronne d'entrée, ledit carter étant réalisé en une seule pièce et comportant au moins une ouverture transversale d'accès à une cavité intérieure délimitée par le carter,
- des pignons comportant deux planétaires de sortie centrés sur un axe longitudinal du différentiel et liés par engrènement à deux satellites qui sont montés en rotation sur un axe vertical, les planétaires et les satellites étant respectivement montés à l'intérieur de la cavité grâce au moins à une desdites ou à ladite ouverture transversale, et
- des moyens de friction du différentiel comportant au moins une rondelle de friction qui est interposée longitudinalement entre chaque planétaire et le carter et au moins une rondelle de friction qui est interposée verticalement entre chaque satellite et le carter.

On connaît de l'état de la technique de nombreux exemples de différentiel de transmission pour véhicule automobile, comme celui décrit par EP 1895197 A.

Dans un véhicule automobile, le couple provenant du moteur est transmis par engrènement jusqu'à une couronne d'entrée qui est liée en rotation au carter du différentiel.

Le carter entraîne ensuite en rotation les satellites par l'intermédiaire d'un axe de guidage associé qui est maintenu à l'intérieur du carter. Les satellites sont chacun liés par engrènement à un planétaire qui entraîne un arbre de transmission associé à l'une des roues motrices du véhicule automobile.

On rappellera qu'une des fonctions principales d'un différentiel est de permettre une vitesse de rotation différente des roues, tout en répartissant le couple entre les deux roues motrices du véhicule afin qu'il soit susceptible de virer, sans que ne survienne de glissement des roues par rapport au sol.

Or, il existe des situations dans lesquelles l'adhérence au sol diffère entre l'une et l'autre des roues motrices du véhicule, le couple transmissible étant alors déterminé par l'adhérence la plus faible. Parfois, lorsque l'adhérence n'est plus suffisante pour assurer la traction du véhicule, il se produit alors un glissement de la roue par rapport au sol, généralement appelé patinage.

Une telle situation de patinage provoque d'importants frottements à l'intérieur du différentiel et tout particulièrement aux interfaces des satellites et des planétaires.

Selon son importance, le patinage provoque donc à tout le moins des échauffements et le cas échéant, en cas d'insistance notamment, une détérioration du différentiel de transmission.

C'est la raison pour laquelle, il est connu de l'état de la technique de prévoir dans un tel différentiel des moyens de friction qui sont respectivement associés aux satellites et aux planétaires.

Selon une première conception connue, les moyens de friction sont constitués par une coquille de friction qui, globalement de forme sphérique, est réalisée en une seule pièce par moulage de matière plastique.

Les moyens de friction associés tant aux satellites qu'aux planétaires du différentiel sont donc réalisés en une seule pièce, monobloc, avec une telle coquille de friction intégralement réalisée en matière plastique.

Par comparaison avec des rondelles de friction indépendantes selon une deuxième conception, le montage dans le carter d'une telle coquille de friction est par conséquent plus facile.

En effet, si le montage d'une telle coquille de friction monobloc requiert de la dextérité lors de sa mise en place dans le carter, la coquille de friction une fois insérée dans le carter s'y maintient, s'immobilise automatiquement, de sorte que l'opérateur est alors plus libre pour pouvoir procéder au montage du mécanisme, plus particulièrement des pignons.

Cependant, la forme globalement sphérique d'une telle coquille de friction est si complexe que sa fabrication ne peut être obtenue que par moulage, limitant par conséquent la fabrication d'une telle coquille de friction aux seules matières plastiques.

La limitation à l'utilisation de matière plastique pour la fabrication d'une telle coquille de friction ne permet pas de choisir librement l'épaisseur comme la matière plastique employée.

En effet, la coquille de friction doit pouvoir être déformée et ne peut présenter une rigidité trop importante faute de quoi la coquille ne pourrait pas être montée dans le carter du différentiel.

Or, il faut également que la coquille présente une bonne résistance, en particulier dans les zones reliant les rondelles de friction qui sont soumises à d'importantes contraintes.

Les principaux inconvénients d'une telle coquille de friction sont donc une complexité de fabrication pour un coût acceptable et l'obligation d'utiliser des matières plastiques.

Pour ces raisons, des moyens de friction selon une deuxième conception ont parfois la préférence des constructeurs automobiles.

Selon cette deuxième conception connue, les moyens de friction sont réalisés sous la forme de rondelles de friction qui sont interposées entre la face interne du carter et les faces respectives des satellites et des planétaires situées en vis-à-vis pour réduire, limiter l'apparition de tels échauffements.

Par comparaison avec la coquille de friction selon la première conception, les moyens de friction du différentiel comportent quatre rondelles de friction qui sont respectivement indépendantes les unes des autres.

Dans cette deuxième conception, les deux rondelles de friction de planétaires sont mises en place dans le carter puis maintenues par les planétaires qui sont montés à leur tour et on procède ensuite au montage des satellites avec leur rondelle de friction respective.

Lorsque le carter est monobloc, réalisé en une seule pièce, il comporte généralement deux ouvertures transversales opposées par l'intermédiaire desquelles on accède à la cavité intérieure dans laquelle sont successivement montées les planétaires et les satellites avec leurs rondelles de friction associées.

Par conséquent, les opérations de montage à l'intérieur du carter du différentiel des rondelles de friction et du mécanisme comportant les planétaires et les satellites selon une telle deuxième conception est plus complexe, notamment par comparaison avec des moyens de friction formé par une coquille de friction.

Cependant, cela n'est pas le seul inconvénient de cette deuxième conception des moyens de friction.

En effet, il existe tout particulièrement un risque important d'oubli de montage de l'une des rondelles de friction lors de ces opérations.

Un tel risque d'oubli est notamment dû à la faible épaisseur des rondelles de friction, généralement de l'ordre de 1 mm, et à l'impossibilité d'en contrôler ensuite la présence par les ouvertures du carter une fois que l'ensemble des coupelles de friction et des pignons est en position de fonctionnement.

Une fois monté le planétaire ou le satellite associé à une rondelle de friction, la rondelle de friction n'est plus visible car, interposée entre une face interne du carter et ledit planétaire ou satellite associé, la rondelle se trouve alors souvent totalement masquée par le planétaire ou le satellite.

Bien que l'on puisse considérer que les risques d'oubli lors du montage soit moindre dans le cas d'une coquille de friction que dans le cas de rondelles de friction indépendantes ou de demi-coquilles, il n'en demeure pas moins qu'un tel risque existe néanmoins également.

Il ressort ainsi de l'analyse de l'état de la technique qui précède, qu'aucune de ces deux conceptions ne donne entière satisfaction.

Le but de la présente invention est notamment de proposer des moyens de friction pour un différentiel dont la présence puisse être vérifiée, en particulier par un contrôle visuel pratiqué à travers l'une des ouvertures d'un carter monobloc.

Dans ce but, l'invention propose un différentiel de transmission du type décrit précédemment, caractérisé en ce que chacune des rondelles de friction associée à un planétaire comporte des moyens indicateurs pour permettre, en position de fonctionnement, d'en contrôler visuellement la présence à travers au moins une desdites ou ladite ouverture du carter.

Dans la présente description, on entend par position de fonctionnement d'une rondelle de friction d'un pignon, la position occupée par ladite rondelle à l'intérieur de la cavité du carter du différentiel après son montage et celui du pignon associé, planétaire ou satellite.

Avantageusement, les moyens indicateurs portés par la rondelle de friction permettent de manière simple et économique d'en signaler la présence, laquelle présence peut être contrôlée visuellement de manière simple et rapide à travers l'une des ouvertures du carter monobloc.

Grâce aux moyens indicateurs selon l'invention, le risque d'oubli des moyens de friction lors des opérations de montage est supprimé puisqu'il est possible à tout instant de s'assurer de la présence ou de l'absence d'une des rondelles de friction, en particulier des rondelles de friction associées aux planétaires.

Selon d'autres caractéristiques de l'invention :
- chacune des rondelles de friction associée à un satellite comporte des moyens indicateurs de présence ;
- lesdits moyens indicateurs de présence d'une rondelle de friction sont constitués par au moins un élément proéminent s'étendant radialement vers l'extérieur à partir du bord circonférentiel externe de ladite rondelle de friction ;
- au moins un desdits ou ledit élément proéminent formant les moyens indicateurs de la rondelle de friction s'étend, en position de fonctionnement, radialement en saillie au-delà des moyens d'engrènement du pignon associé de manière à en signaler la présence lors dudit contrôle visuel effectué à travers au moins une desdites ou ladite ouverture du carter ;
- chaque rondelle de friction comporte un nombre donné d'éléments qui sont répartis circonférentiellement de manière régulière pour garantir un contrôle visuel effectif à travers l'ouverture, indépendamment de la position angulaire de ladite rondelle de friction par rapport à l'ouverture du carter et par rapport au pignon auquel ladite rondelle est associée ;
- le nombre d'éléments d'une rondelle de friction est compris entre 3 et 9, de préférence égal à 6 ;
- les moyens indicateurs de présence sont réalisés en une seule pièce, venus de matière, avec la rondelle de friction ;
- les rondelles de friction associées aux planétaires sont réalisées en matière plastique et les rondelles de friction associées aux satellites sont réalisées en matière plastique ou en métal.

D'autres caractéristiques et avantages de l'invention apparaîtront à la lecture de la description qui va suivre pour la compréhension de laquelle on se reportera aux dessins annexés dans lesquels :

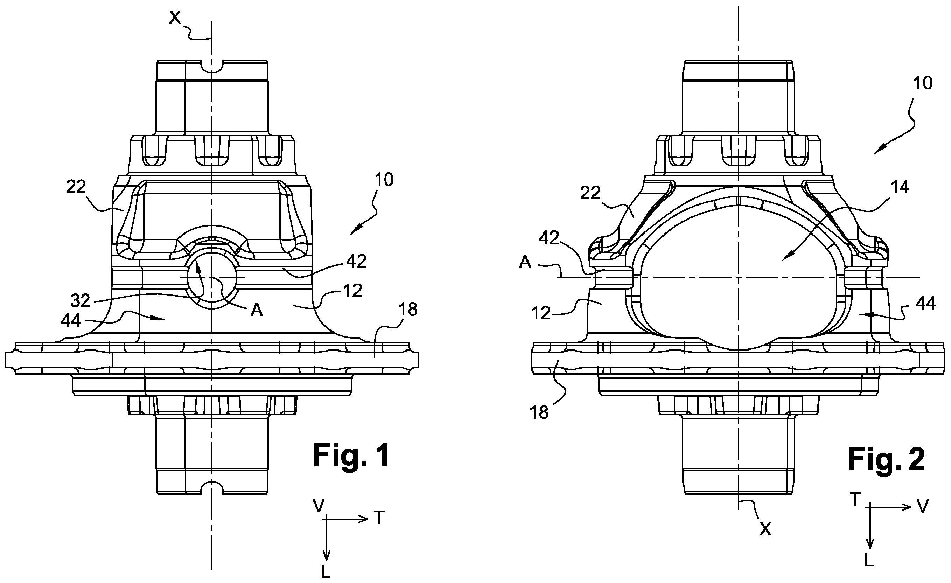

- les figures 1 et 2 sont respectivement une vue de dessus et une vue de côté d'un exemple de carter d'un différentiel de transmission, de type monobloc, c'est à dire réalisé en une seule pièce ;

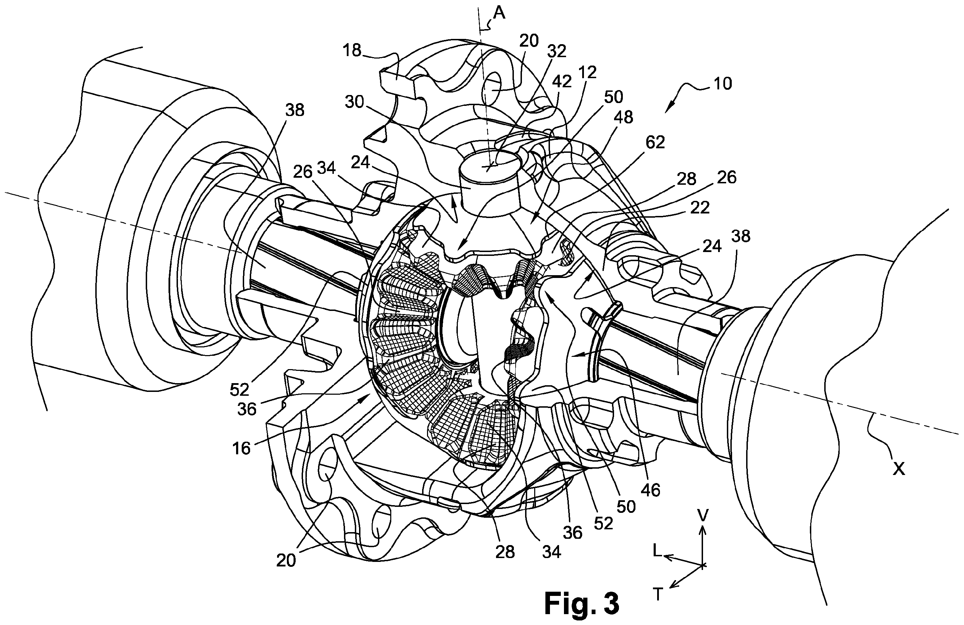

- la figure 3 est une vue en perspective qui représente un différentiel comportant un tel carter monobloc selon les figures 1 et 2, et qui, au moyen d'un arrachement, illustre en position de fonctionnement les pignons formés par les planétaires et les satellites et leurs rondelles de friction associées, toutes les rondelles de friction étant dans l'exemple de réalisation munies de moyens indicateurs de présence selon l'invention ;

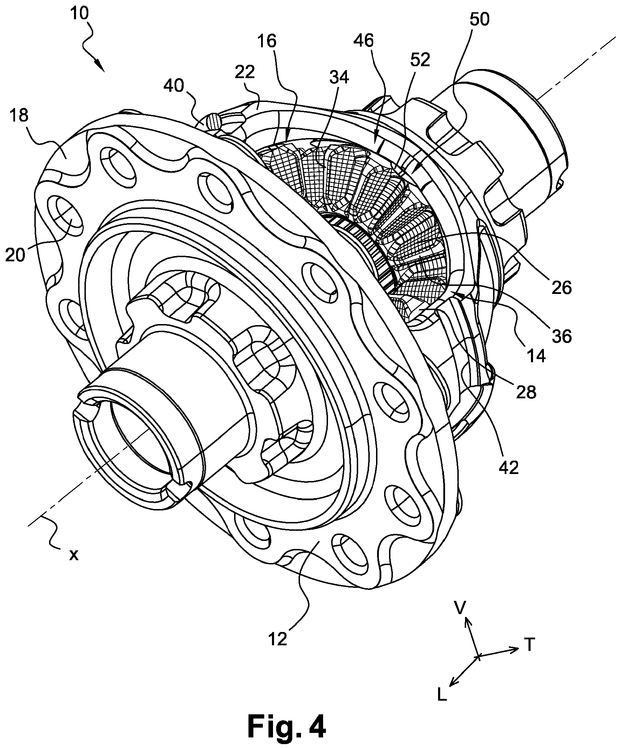

- la figure 4 est une vue en perspective qui représente un différentiel selon la figure 3 et qui illustre plus particulièrement les moyens indicateurs de l'une des rondelles de friction pour planétaire qui, en position de fonctionnement, sont visibles à travers les ouvertures latérales du carter monobloc pour permettre d'en contrôler visuellement la présence ;

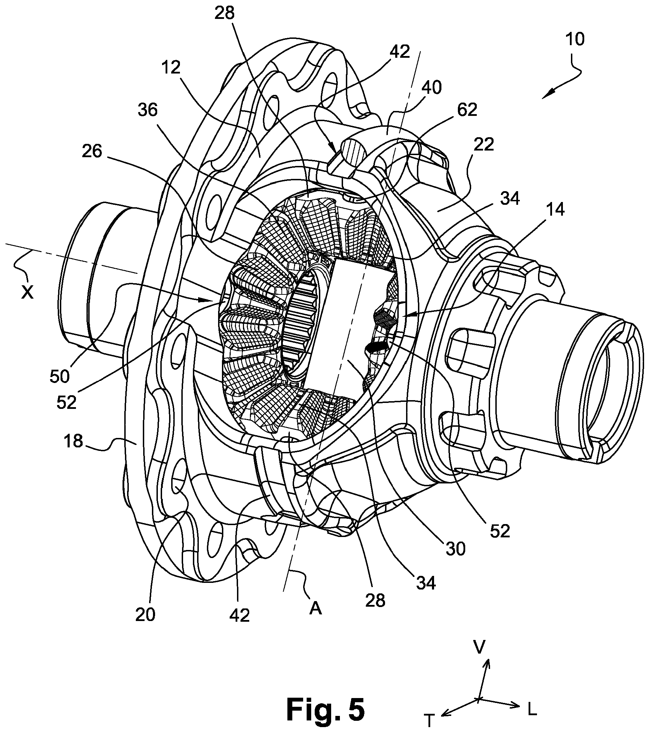

- la figure 5 est une vue en perspective qui représente un différentiel selon la figure 3 et qui illustre plus particulièrement les moyens indicateurs de l'une des rondelles de friction pour satellite qui, en position de fonctionnement, sont visibles à travers les ouvertures latérales du carter monobloc pour permettre d'en contrôler visuellement la présence ;

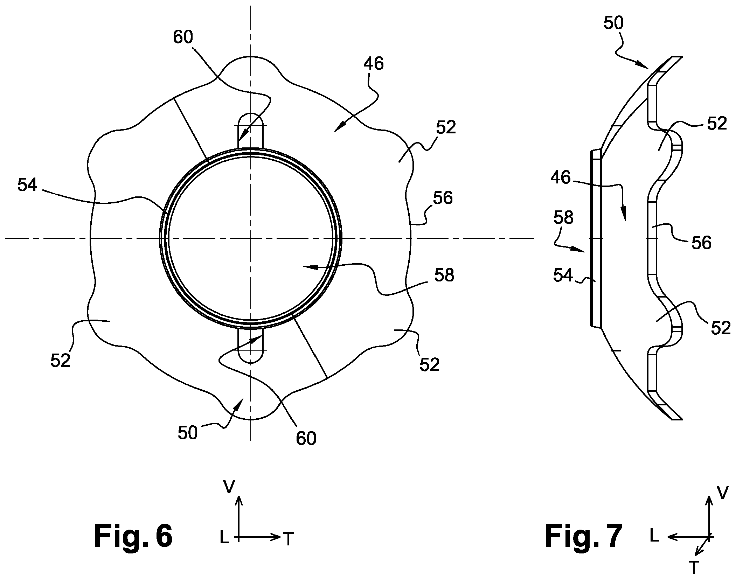

- les figures 6 et 7 sont respectivement une vue de face et une vue de côté qui représentent une rondelle de friction pour planétaire et qui illustrent un exemple de réalisation des moyens indicateurs de présence selon l'invention pour une telle rondelle ;

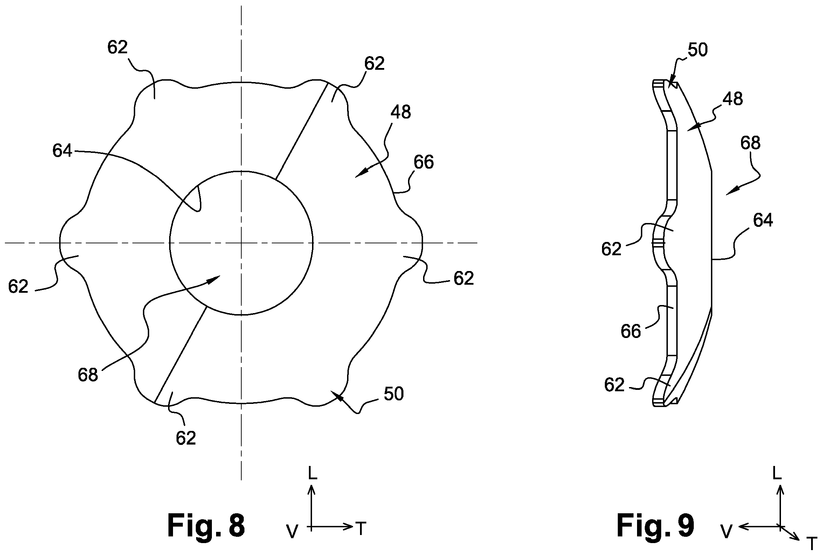

- les figures 8 et 9 sont respectivement une vue de face et une vue de côté qui représentent une rondelle de friction pour satellite et qui illustrent un exemple de réalisation des moyens indicateurs de présence selon l'invention d'une telle rondelle.

Dans la description qui va suivre, des chiffres de référence identiques désignent des pièces identiques ou ayant des fonctions similaires.

On a représenté aux figures 1 et 2, à titre non limitatif, un exemple d'un carter 12 d'un différentiel 10 de transmission, notamment pour un véhicule automobile.

Le carter 12 selon cet exemple est un carter monobloc, c'est-à-dire réalisé en une seule pièce, ce qui correspond à une conception et un procédé de fabrication particuliers.

Un tel carter 12 se caractérise par la présence d'au moins une ouverture 14 latérale, généralement deux ouvertures 14 transversalement opposées, qui permettent d'accéder à une cavité 16 intérieure délimitée par le carter 12 et ce faisant d'y monter notamment les différents pignons du différentiel 10.

Par comparaison, on comprendra que le montage des pignons du différentiel 10 serait différent avec un carter 12 réalisé en au moins deux parties assemblables et qu'à tout le moins de telles ouvertures 14 ne seraient pas forcément nécessaires.

Cependant, si de telles ouvertures 14 sont notamment nécessaires dans le cas d'un carter 12 monobloc, ces ouvertures 14 présentent également l'avantage de permettre un examen visuel du mécanisme du différentiel 10, en particulier les pignons et les moyens de friction associés, lorsqu'après leurs montages respectifs, l'ensemble est en position de fonctionnement dans le carter 12.

On a représenté sur la figure 3, un différentiel 10 comportant un carter 12 selon les figures 1 et 2 et dans lequel les organes dudit mécanisme ont été successivement montés grâce aux ouvertures 14 latérales, ici transversales.

On décrira ci-après plus en détail un tel différentiel 10, lequel différentiel 10 ne constitue toutefois qu'un exemple de réalisation donné à titre non limitatif.

Le différentiel 10 présente un axe X qui détermine, par convention, une direction axiale dans la suite de la description.

Les boîtes de vitesses montées dans l'axe d'un moteur disposé entre les roues motrices d'un véhicule, comportent généralement un arbre lié au moteur du véhicule par un dispositif d'embrayage, et un arbre parallèle récepteur qui entraîne les roues motrices du véhicule par l'intermédiaire d'un tel différentiel.

Les arbres moteur et récepteur peuvent être reliés entre eux par différents dispositifs d'engrenages, comportant des dentures externes ou des trains planétaires, pour transmettre le mouvement suivant différents rapports de démultiplication correspondant respectivement à autant de rapports de vitesses, les changements de vitesses étant manuels ou automatisés.

L'arbre récepteur comporte généralement un pignon de sortie qui répartit le mouvement vers le deux roues motrices, ledit pignon de sortie engrenant sur une couronne d'entrée (non représentée ici) qui est liée à une partie 18 en forme de flasque du carter 12 du différentiel 10.

Tel qu'illustré sur les figures 1 à 5, le carter 12 du différentiel 10 comporte un flasque 18 comportant circonférentiellement des perçages 20 pour la fixation, par exemple ici par vissage, de la couronne d'entrée, le carter 12 supportant alors la couronne d'entrée du différentiel 10.

En variante, la couronne d'entrée est liée au carter 12 du différentiel 10 par rivetage ou tout autre moyen de fixation.

La couronne d'entrée est liée en rotation au carter 12 du différentiel 10 et est apte à entraîner le carter 12 en rotation pour assurer la transmission du couple moteur.

Le carter 12 comporte des parois 22 dont les faces 24 internes délimitent ladite cavité 16 qui est globalement sphérique.

Par convention, les termes "interne" et "externe" sont utilisés ci-après pour désigner des éléments du différentiel 10 selon leur position par rapport à l'axe X du différentiel, un élément proche de l'axe étant qualifié d'interne par opposition à un élément externe qui en sera plus éloigné.

Le différentiel 10 comporte des pignons, respectivement une paire de planétaires 26 et une paire de satellites 28.

Les deux planétaires 26 de sortie sont centrés sur l'axe X longitudinal du différentiel 10.

Les deux planétaires 26 de sortie sont liés par engrènement à au moins deux satellites 28.

Les deux planétaires 26 et les deux satellites 28 sont respectivement agencés, en position de fonctionnement, à l'intérieur de la cavité 16 délimitée par le carter 12 et y sont montés grâce aux ouvertures 14 latérales que comporte le carter 12 monobloc.

Le différentiel 10 comporte un axe 30 vertical sur lequel les satellites 28 sont montés en rotation et dont chacune des extrémités est reçue dans un perçage 32 vertical du carter 12, les deux perçages 32 guidant l'axe 30 dans le carter 12 étant alignés verticalement.

L'axe 30 des satellites 28 s'étend suivant un axe A géométrique qui, orthogonal à l'axe X longitudinal du différentiel 10, s'étend selon la direction verticale.

Dans la présente demande, l'orientation verticale est déterminée par simple convention pour faciliter la compréhension et par conséquent sans référence aucune à la gravité terrestre.

Les planétaires 26 et les satellites 28 forment des pignons qui sont respectivement pourvus de dentures formant des moyens d'engrènement pour réaliser une liaison par engrènement.

La denture 34 des deux satellites 28 guidés sur l'axe 30 vertical commun engrenant avec la denture 36 des deux planétaires 26 de sortie centrés sur l'axe X longitudinal du différentiel.

Les planétaires 26 entraînent chacun par engrènement un arbre 38 de sortie, chaque arbre 38 de sortie transmettant le couple à une roue motrice, tout en permettant des débattements angulaires dus à la direction et à la suspension du véhicule.

Avantageusement, le différentiel 10 de transmission permet de répartir inégalement le mouvement sortant de la boîte de vitesses vers les roues motrices, dans les virages notamment où la roue intérieure parcourt une trajectoire plus courte, et possède donc une vitesse réduite.

La couronne d'entrée transmet, par l'intermédiaire du carter 12, le couple du moteur à l'axe 30 des satellites 28 puis les satellites 28 transmettent ce couple aux deux planétaires 26 et arbres 38 de sortie tout en répartissant le mouvement entre les deux roues, par rapport à une vitesse moyenne du véhicule.

De cette manière, un accroissement de la vitesse d'une roue peut se faire indépendamment de la vitesse de l'autre roue.

Le différentiel 10 comporte des moyens 40 de blocage destinés à bloquer au moins en translation l'axe 30 vertical des satellites 28 par rapport au carter 12, l'axe 30 étant guidé dans les perçages 32 du carter 12.

Les moyens de blocage de l'axe 30 sont par exemple ici constitués par un jonc 40 qui s'étend circonférentiellement autour du carter 12 et qui est reçu dans une gorge 42 réalisée dans la surface 44 externe de la paroi 22 du carter 12.

La gorge 42 est interrompue par les deux ouvertures 14 transversales mais relie les deux perçages 32 du carter 12 permettant le montage de l'axe 30 des satellites 28. La gorge 42 permet d'immobiliser, notamment longitudinalement, le jonc 40 qui maintient verticalement l'axe 30 des satellites 28.

Tel que représenté partiellement sur les figures 4 et 5 pour ne pas masquer une partie de l'ouverture 14, le jonc 40 immobilise verticalement l'axe 30 des satellites 28.

En variante, les moyens de blocage de l'axe 30 sont par exemple formés par au moins une goupille reçue dans un perçage et s'étendant à travers la paroi 22 du carter 12 et une extrémité de l'axe 30.

Avantageusement, le différentiel 10 comporte des moyens de friction qui sont associés aux pignons, respectivement à chacun des planétaires 26 et à chacun des satellites 28.

Dans le différentiel 10 selon l'exemple de réalisation, les moyens de friction du différentiel 10 comportent au moins une paire de rondelles (ou coupelles) de friction qui sont associées aux planétaires 26 et au moins une autre paire de rondelles (ou coupelles) de friction qui sont associées aux satellites 28.

Les moyens de friction comportent d'une part une rondelle 46 de friction qui est interposée longitudinalement entre chaque planétaire 26 et le carter 12 et, d'autre part, une rondelle 48 de friction qui est interposée verticalement entre chaque satellite 28 et le carter 12.

Conformément à l'invention, au moins chacune des rondelles 46 de friction associée à un planétaire 26 comporte des moyens 50 indicateurs pour permettre, en position de fonctionnement, d'en contrôler visuellement la présence à travers au moins une desdites ou ladite ouverture 14 du carter 12.

Par position de fonctionnement d'une rondelle 46, 48 de friction d'un pignon, un planétaire 26 ou satellite 28, on entend la position occupée par ladite rondelle 46 ou 48 à l'intérieur de la cavité 16 du carter 12 du différentiel 10 après son montage et celui dudit pignon 26 ou 28 associé.

Le carter 12 du différentiel 10 est une pièce qui varie en fonction des applications, notamment des moteurs des véhicules, et les ouvertures 14 transversales par lesquelles il est possible de procéder à un contrôle visuel peuvent en particulier présenter des dimensions plus ou moins importantes.

Pour certaines applications, la conformation du carter 12 monobloc et de ses ouvertures 14 ainsi que celle des satellites 28 et de leurs rondelles 48 de friction associées peut permettre de réaliser un contrôle visuel de la présence desdites rondelles 48 de friction pour satellite 28.

Avantageusement, les rondelles 48 de friction pour satellite 28 peuvent alors être de type conventionnel et ne pas comporter de moyens indicateurs de présence selon l'invention.

En variante non représentée, lorsque seulement l'une des paires de rondelles 46, 48 de friction est munie de moyens 50 indicateurs, alors ladite paire de rondelles de friction comportant lesdits moyens 50 indicateurs est de préférence constituée par la paire de rondelles 46 de friction associées aux planétaires 26 du différentiel 10.

Tel n'est toutefois pas le cas dans le présent exemple de réalisation représenté sur les figures 3 à 5 dans lequel l'ensemble des rondelles 46, 48 de friction du différentiel sont munies de moyens 50 indicateurs de présence selon l'invention.

Avantageusement, chacune des rondelles 48 de friction associée à un satellite 28 comporte des moyens 50 indicateurs ou d'indication de présence.

Dans l'exemple de réalisation illustré par les figures 3 et suivantes, chacune des rondelles 46 de friction associée à un planétaire 26 et chacune des rondelles 48 de friction associée à un satellite 28 comportent respectivement de tels moyens 50 indicateurs ou d'indication de présence.

De préférence, les moyens 50 indicateurs sont ici analogues pour les rondelles 46 de friction des planétaires 26 et pour les rondelles 48 de friction des satellites 28.

En variante, les moyens 50 indicateurs de présence selon l'invention pourraient bien entendu être réalisés avec des formes différentes pour lesdites rondelles 46 de friction des planétaires 26 d'une part et les rondelles 48 de friction des satellites 28, d'autre part.

Avantageusement, lesdits moyens 50 indicateurs de présence d'une rondelle 46 de friction pour planétaire 26 sont constitués par au moins un élément 52 proéminent, tel qu'un ergot.

Tel qu'illustré par les figures 6 et 7, la rondelle 46 de friction pour planétaire 26 comporte notamment un bord 54 circonférentiel interne et un bord 56 circonférentiel externe.

Le bord 54 circonférentiel interne délimite une ouverture 58 pour le passage de l'arbre 38 de sortie du planétaire 26 associé à ladite rondelle 46 de friction.

De préférence, les rondelles 46 de friction pour planétaire 26 comportent au moins un orifice 60 pour permettre le passage d'un lubrifiant, en général de l'huile, notamment vers les moyens d'engrènement des pignons, soit les dentures 36 des planétaires 26 et les dentures 34 des satellites 28 du différentiel 10.

Au moins un desdits ou ledit élément 52 proéminent formant lesdits moyens 50 indicateurs de présence de ladite rondelle 46 de friction pour planétaire 26 s'étend radialement vers l'extérieur à partir du bord 56 circonférentiel externe.

Tel qu'illustré sur la figure 4, au moins un desdits ou ledit élément 52 proéminent formant les moyens 50 indicateurs de la rondelle 46 de friction s'étend, en position de fonctionnement, radialement en saillie au-delà des moyens d'engrènement formés par la denture 36 du planétaire 26 associé de manière à en signaler la présence lors dudit contrôle visuel effectué à travers ladite au moins une ouverture 14 du carter 12 du différentiel 10.

Chaque rondelle 46 de friction associée à un planétaire 26 comporte un nombre N donné d'éléments 52 proéminents qui sont répartis circonférentiellement, de préférence de manière régulière, pour garantir un contrôle visuel effectif à travers l'ouverture 14, indépendamment de la position angulaire de ladite rondelle 46 de friction par rapport à l'ouverture 14 du carter 12 et par rapport au planétaire 26 auquel ladite rondelle 46 de friction est associée.

Avantageusement, l'absence d'indexation angulaire de la rondelle 46 ou 48 de friction participe à en faciliter le montage dans la cavité 16 du carter 12.

Avantageusement, le nombre N d'éléments 52 proéminents que comporte une rondelle 46 de friction pour planétaire 26 est compris entre 3 et 9.

Le nombre N d'éléments 52 proéminents de la rondelle 46 de friction pour planétaire 26 est notamment déterminé en fonction du carter 12 et des dimensions des ouvertures 14 transversales et des planétaires 26.

De préférence, le nombre N d'éléments 52 proéminents d'une rondelle 46 de friction pour planétaire 26 est ici égal à 6 comme illustré sur les figures 6 et 7.

Avantageusement, au moins un élément 52 proéminent d'une rondelle 46 de friction associée à un planétaire 26 est visible par l'ouverture 14 lorsqu'il est procédé au contrôle visuel de la présence de ladite rondelle 46 pour vérifier qu'elle n'a pas été omise au cours des opérations de montage.

Les rondelles 46 de friction associées aux planétaires 26 sont réalisées en matière plastique.

Avantageusement, les moyens 50 indicateurs de présence formés par les éléments 52 sont réalisés en une seule pièce, venus de matière, avec la rondelle 46 de friction pour planétaire 26.

Dans l'exemple de réalisation, les rondelles 48 de friction des satellites 28 sont également munies de moyens 50 indicateurs de présence selon l'invention.

Avantageusement, lesdits moyens 50 indicateurs de présence d'une rondelle 48 de friction sont de manière analogue constitués par au moins un élément 62 proéminent, tel qu'un ergot.

Tel qu'illustré par les figures 8 et 9, la rondelle 48 de friction pour satellite 28 comporte notamment un bord 64 circonférentiel interne et un bord 66 circonférentiel externe.

Le bord 64 circonférentiel interne délimite une ouverture 68 pour le passage de l'axe 30 des satellites 28 du différentiel 10, lequel axe 30 s'étend verticalement à travers les perçages 32 du carter 12 et est bloqué par le jonc 40.

L'élément 62 proéminent formant lesdits moyens 50 indicateurs de présence de ladite rondelle 48 de friction pour satellite 28 s'étend radialement vers l'extérieur à partir du bord 66 circonférentiel externe.

Tel qu'illustré sur la figure 5, ledit au moins un élément 62 proéminent formant les moyens 50 indicateurs de la rondelle 48 de friction s'étend, en position de fonctionnement, radialement en saillie au-delà des moyens d'engrènement formés par la denture 34 du satellite 28 associé de manière à en signaler la présence lors dudit contrôle visuel effectué à travers ladite au moins une ouverture 14 du carter 12 du différentiel 10.

Chaque rondelle 48 de friction associée à un satellite 28 comporte un nombre N donné d'éléments 62 qui sont répartis circonférentiellement de manière régulière pour garantir un contrôle visuel effectif à travers l'ouverture 14, indépendamment de la position angulaire de ladite rondelle 48 de friction par rapport à l'ouverture 14 du carter 12 et par rapport au satellite 28 auquel ladite rondelle 48 de friction est associée.

Avantageusement, le nombre N d'éléments 62 proéminents que comporte une rondelle 48 de friction pour satellite 28 est compris entre 3 et 9.

Tel qu'indiqué précédemment, le nombre N d'éléments 62 proéminents est déterminé pour chaque application en fonction des caractéristiques du carter 12, notamment des ouvertures 14, et du pignon associé.

Lorsque, comme dans l'exemple de réalisation, l'ensemble des moyens de friction comportent des moyens 50 indicateurs constitués par des éléments 52 et 62 proéminents alors le nombre N d'éléments de chacune des rondelles 46 et 48 de friction est également déterminé pour éviter en fonctionnement tout risque d'interférences par contact entre les éléments 52 et 62 proéminents de rondelles de friction adjacentes.

De préférence, le nombre N d'éléments 62 proéminents d'une rondelle 48 de friction pour satellite 28 est ici égal à 6, tel qu'illustré sur les figures 8 et 9.

Les rondelles 48 de friction associées aux satellites 28 sont réalisées en matière plastique ou en métal.

Avantageusement, les moyens 50 indicateurs de présence formés par les éléments 62 sont réalisés en une seule pièce, venus de matière, avec la rondelle 48 de friction pour satellite 28.

On a représenté en détails sur les figures 6 et 7, une rondelle 46 de friction pour un planétaire 26 selon l'exemple de réalisation décrit précédemment associée à un planétaire 26 du un différentiel 10 de transmission, notamment pour véhicule automobile.

Selon l'invention, ladite rondelle 46 de friction destinée à être associée à un planétaire 26 se caractérise par le fait que ladite rondelle 46 de friction pour planétaire 26 comporte des moyens 50 indicateurs de présence pour permettre d'en contrôler visuellement la présence dans un différentiel 10 de transmission, tout particulièrement un différentiel 10 comportant un carter 12 de type monobloc munie d'au moins une ouverture 14.

On a représenté en détails sur les figures 8 et 9, une rondelle 48 de friction pour un satellite 28 selon l'exemple de réalisation décrit précédemment associée à un satellite 28 du différentiel 10 de transmission, notamment pour véhicule automobile.

Selon l'invention, ladite rondelle 48 de friction destinée à être associée à un satellite 28 se caractérise par le fait que ladite rondelle 48 de friction de satellite 28 comporte des moyens 50 indicateurs de présence pour permettre d'en contrôler visuellement la présence dans un différentiel 10, tout particulièrement un différentiel 10 comportant un carter 12 de type monobloc munie d'au moins une ouverture 14.

## Revendications

1. Différentiel (10) de transmission, notamment pour véhicule automobile, comportant au moins :
- un carter (12) qui est apte à être lié en rotation à une couronne d'entrée, ledit carter (12) étant réalisé en une seule pièce et comportant au moins une ouverture (14) transversale d'accès à une cavité (16) intérieure délimitée par le carter (12),
- des pignons (26, 28) comportant deux planétaires (26) de sortie centrés sur un axe (X) longitudinal du différentiel et liés par engrènement à deux satellites (28) qui sont montés en rotation sur un axe (30) vertical, les planétaires (26) et les satellites (28) étant respectivement montés à l'intérieur de la cavité (16) grâce à au moins à une desdites ou à ladite ouverture (14) transversale, et
- des moyens de friction du différentiel comportant au moins une rondelle (46) de friction qui est interposée longitudinalement entre chaque planétaire (26) et le carter (12) et au moins une rondelle (48) de friction qui est interposée verticalement entre chaque satellite (28) et le carter (12),
**caractérisé en ce que** chacune des rondelles (46) de friction associée à un planétaire (26) comporte des moyens (50) indicateurs pour permettre, en position de fonctionnement, d'en contrôler visuellement la présence à travers au moins une desdites ou ladite ouverture (14) du carter (12), lesdits moyens (50) indicateurs de présence d'une rondelle (46) de friction étant constitués par un nombre N donné d'éléments (52) proéminent compris entre 3 et 9 qui s'étendent radialement vers l'extérieur à partir d'un bord (56) circonférentiel externe de ladite rondelle (46) de friction, en saillie au-delà des moyens (34) d'engrènement du pignon (26) associé, et qui sont répartis circonférentiellement de manière régulière pour garantir un contrôle visuel effectif à travers l'ouverture (14), indépendamment de la position angulaire de ladite rondelle (46) de friction par rapport à l'ouverture (14) du carter (12) et par rapport au pignon (26) auquel ladite rondelle (46) est associée.

2. Différentiel selon la revendication 1 ou 2, **caractérisé en ce que** chacune des rondelles (48) de friction associée à un satellite (28) comporte des moyens (50) indicateurs de présence d'une rondelle (48) de friction étant constitués par un nombre N donné d'éléments (62) proéminent compris entre 3 et 9 qui s'étendent radialement vers l'extérieur à partir d'un bord (66) circonférentiel externe de ladite rondelle (48) de friction, en saillie au-delà des moyens (36) d'engrènement du pignon (28) associé, et qui sont répartis circonférentiellement de manière régulière pour garantir un contrôle visuel effectif à travers l'ouverture (14), indépendamment de la position angulaire de ladite rondelle (48) de friction par rapport à l'ouverture (14) du carter (12) et par rapport au pignon (28) auquel ladite rondelle (48) est associée.

3. Différentiel selon la revendication 1 ou 2, **caractérisé en ce que** le nombre N d'éléments (52, 62) d'une rondelle (46, 48) de friction est égal à 6.

4. Différentiel selon l'une quelconque des revendications précédentes, **caractérisé en ce que** les moyens (50) indicateurs de présence sont réalisés en une seule pièce, venus de matière, avec la rondelle (46, 48) de friction.

5. Différentiel selon l'une quelconque des revendications précédentes, **caractérisé en ce que** les rondelles (46) de friction associées aux planétaires (26) sont réalisées en matière plastique et les rondelles (48) de friction associées aux satellites (28) sont réalisées en matière plastique ou en métal.

## Patentansprüche

1. Getriebedifferential (10), insbesondere für ein Kraftfahrzeug, welches wenigstens aufweist:
- ein Gehäuse (12), welches geeignet ist, mit einem Antriebstellerrad drehfest verbunden zu werden, wobei das Gehäuse (12) aus einem Stück hergestellt ist und wenigstens eine quer verlaufende Zugangsöffnung (14) zu einem von dem Gehäuse (12) begrenzten inneren Hohlraum (16) aufweist,
- Kegelräder (26, 28), die zwei Ausgangs-Achswellenräder (26) umfassen, die auf einer Längsachse (X) des Differentials zentriert sind und durch Zahneingriff mit zwei Ausgleichkegelrädern (28) verbunden sind, welche drehbar auf einer vertikalen Achse (30) gelagert sind, wobei die Achswellenräder (26) und die Ausgleichkegelräder (28) jeweils im Inneren des Hohlraums (16) mittels wenigstens einer der quer verlaufenden Öffnungen oder der quer verlaufenden Öffnung (14) angebracht sind, und
- Reibungsmittel des Differentials, die wenigstens eine Reibscheibe (46), welche in Längsrichtung zwischen jedem Achswellenrad (26) und dem Gehäuse (12) angeordnet ist, und wenigstens eine Reibscheibe (48), welche vertikal zwischen jedem Ausgleichkegelrad (28) und dem Gehäuse (12) angeordnet ist, umfassen,
**dadurch gekennzeichnet, dass** jede der Reibscheiben (46), die einem Achswellenrad (26) zugeordnet ist, Anzeigemittel (50) aufweist, um in der Betriebsposition zu ermöglichen, ihr Vorhandensein durch wenigstens eine der Öffnungen oder die Öffnung (14) des Gehäuses (12) hindurch visuell zu kontrollieren, wobei die Anzeigemittel (50) für das Vorhandensein einer Reibscheibe (46) aus einer gegebenen Anzahl N von vorragenden Elementen (52) zwischen 3 und 9 bestehen, welche sich von einem äußeren Umfangsrand (56) der Reibscheibe (46) aus radial nach außen erstrecken, wobei sie über die Eingriffsmittel (34) des zugeordneten Kegelrades (26) hinaus vorstehen, und welche über den Umfang gleichmäßig verteilt sind, um eine effiziente visuelle Kontrolle durch die Öffnung (14) hindurch zu garantieren, unabhängig von der Winkelposition der Reibscheibe (46) in Bezug auf die Öffnung (14) des Gehäuses (12) und in Bezug auf das Kegelrad (26), dem die Reibscheibe (46) zugeordnet ist.

2. Differential nach Anspruch 1 oder 2, **dadurch gekennzeichnet, dass** jede der Reibscheiben (48), die einem Ausgleichkegelrad (28) zugeordnet ist, Anzeigemittel (50) für das Vorhandensein einer Reibscheibe (48) aufweist, die aus einer gegebenen Anzahl N von vorragenden Elementen (62) zwischen 3 und 9 bestehen, welche sich von einem äußeren Umfangsrand (66) der Reibscheibe (48) aus radial nach außen erstrecken, wobei sie über die Eingriffsmittel (36) des zugeordneten Kegelrades (28) hinaus vorstehen, und welche über den Umfang gleichmäßig verteilt sind, um eine effiziente visuelle Kontrolle durch die Öffnung (14) hindurch zu garantieren, unabhängig von der Winkelposition der Reibscheibe (48) in Bezug auf die Öffnung (14) des Gehäuses (12) und in Bezug auf das Kegelrad (28), dem die Reibscheibe (48) zugeordnet ist.

3. Differential nach Anspruch 1 oder 2, **dadurch gekennzeichnet, dass** die Anzahl N von Elementen (52, 62) einer Reibscheibe (46, 48) gleich 6 ist.

4. Differential nach einem der vorhergehenden Ansprüche, **dadurch gekennzeichnet, dass** die Anzeigemittel (50) für das Vorhandensein aus einem Stück hergestellt sind und mit der Reibscheibe (46, 48) stoffschlüssig verbunden sind.

5. Differential nach einem der vorhergehenden Ansprüche, **dadurch gekennzeichnet, dass** die Reibscheiben (46), die den Achswellenrädern (26) zugeordnet sind, aus Kunststoff hergestellt sind und die Reibscheiben (48), die den Ausgleichkegelrädern (28) zugeordnet sind, aus Kunststoff oder aus Metall hergestellt sind.

## Claims

1. Transmission differential (10), in particular for a motor vehicle, comprising at least:
- a casing (12) that is able to be rotationally connected to an input ring gear, said casing (12) being made in one piece and comprising at least one transverse opening (14) for accessing an interior cavity (16) delimited by the casing (12),
- pinions (26, 28) comprising two output sun gears (26) that are centred on a longitudinal axis (X) of the differential and are connected by meshing to two planet gears (28) that are rotationally mounted on a vertical shaft (30), the sun gears (26) and the planet gears (28) being respectively mounted inside the cavity (16) by virtue at least of one of said transverse openings (14) or of said transverse opening (14), and
- friction means of the differential, comprising at least one friction washer (46) that is interposed longitudinally between each sun gear (26) and the casing (12) and at least one friction washer (48) that is interposed vertically between each planet gear (28) and the casing (12),
**characterized in that** each of the friction washers (46) that is associated with a sun gear (26) comprises indicator means (50) for allowing, in the operating position, the presence thereof to be visually checked through at least one of said openings (14) or said opening (14) in the casing (12), said means (50) for indicating the presence of a friction washer (46) being formed by a given number N of between 3 and 9 protruding elements (52) that extend radially outwards from an external circumferential edge (56) of said friction washer (46), projecting beyond the meshing means (34) of the associated pinion (26), and that are circumferentially distributed in a regular manner so as to ensure effective visual checking through the opening (14), independently of the angular position of said friction washer (46) relative to the opening (14) in the casing (12) and relative to the pinion (26) with which said washer (46) is associated.

2. Differential according to Claim 1 or 2, **characterized in that** each of the friction washers (48) that is associated with a planet gear (28) comprises means (50) for indicating the presence of a friction washer (48) that are formed by a given number N of between 3 and 9 protruding elements (62) that extend radially outwards from an external circumferential edge (66) of said friction washer (48), projecting beyond the meshing means (36) of the associated pinion (28), and that are circumferentially distributed in a regular manner so as to ensure effective visual checking through the opening (14), independently of the angular position of said friction washer (48) relative to the opening (14) in the casing (12) and relative to the pinion (28) with which said washer (48) is associated.

3. Differential according to Claim 1 or 2, **characterized in that** the number N of elements (52, 62) of a friction washer (46, 48) is equal to 6.

4. Differential according to any one of the preceding claims, **characterized in that** the presence indicator means (50) are made in one piece, integrally, with the friction washer (46, 48).

5. Differential according to any one of the preceding claims, **characterized in that** the friction washers (46) associated with the sun gears (26) are made of plastics material and the friction washers (48) associated with the planet gears (28) are made of plastics material or metal.
